# EUROPÄISCHE PATENTSCHRIFT

(11) **EP 4 273 725 B1**
(45) Veröffentlichungstag und Bekanntmachung des Hinweises auf die Patenterteilung: **21.10.2026**
(21) Anmeldenummer: 22171185.6
(22) Anmeldetag: 02.05.2022
(51) Int. Cl.: G06F 21/57, G06F 30/20, G06F 30/33, H04L 9/40, G06F 30/15

(54) **VERFAHREN ZUR ERMITTLUNG VON KRITISCHEN SCHWACHSTELLENKETTEN**
METHOD FOR THE DETERMINATION OF CRITICAL WEAKPOINT CHAINS
PROCÉDÉ DE DÉTERMINATION DE VULNÉRABILITÉS CRITIQUES

(43) Veröffentlichungstag der Anmeldung: 08.11.2023
(73) Patentinhaber: AIT Austrian Institute of Technology GmbH, 1210 Wien (AT)
(72) Erfinder: THORSTEN, Tarrach, 2201 Seyring (AT); KORBINIAN, Christl, D-94032 Passau (AT); ABDELKADAR, Shaaban, 1180 Wien (AT); CHLUP, Sebastian, 1190 Wien (AT); SCHMITTNER, Christoph, 1020 Wien (AT)
(74) Vertreter: Wildhack & Jellinek Patentanwälte GmbH

(56) Entgegenhaltungen:
- WO-A1-2020/247993
- US-A1- 2017 061 124
- US-A1- 2022 245 260
- SOMMER FLORIAN ET AL: "Survey and Classification of Automotive Security Attacks", INFORMATION, vol. 10, no. 4, 19 April 2019 (2019-04-19), pages 148, XP055782176, DOI: 10.3390/info10040148
- SOMMER FLORIAN ET AL: "Model-Based Security Testing of Vehicle Networks", 2021 INTERNATIONAL CONFERENCE ON COMPUTATIONAL SCIENCE AND COMPUTATIONAL INTELLIGENCE (CSCI), IEEE, 15 December 2021 (2021-12-15), pages 685 - 691, XP034138430, DOI: 10.1109/CSCI54926.2021.00179

## Beschreibung

Die Erfindung betrifft ein Verfahren zur Ermittlung von kritischen Schwachstellenketten in einer Gesamtheit von gleichartig aufgebauten Hardware-Produkten, die gegebenenfalls sowohl Hardware- als auch Softwarekomponenten enthalten.

Produkte, die in Massenfertigung hergestellt werden, weisen in der Regel dieselben sicherheitskritischen Schwachstellen auf. Gerade im Bereich von gleichartig aufgebauten elektronischen Produkten, die in der Regel sowohl Hardware- als auch Softwarekomponenten enthalten, besteht das Problem, dass einzelne Schwachstellen, die in einer Vielzahl von Serienprodukten enthalten sind, dazu führen kann, dass sämtliche dieser Serienprodukte anfällig für bestimmte Arten von Fehlern oder Angriffen unbefugter Dritter sind.

Grundsätzlich ist davon auszugehen, dass Produkte, die eine Vielzahl von einzelnen miteinander zusammenwirkenden Hardware- als auch Softwarekomponenten enthalten, niemals fehlerfrei sein werden, da bei Hardware- und Softwarekomponente unterschiedliche Schwachstellen erst im Laufe der Zeit erkannt werden können. In vielen Fällen werden auch einzelne isolierte Schwachstellen keinen nennenswerten Schaden für das Gesamtsystem verursachen, sodass diese Schwachstellen oft unerkannt bleiben. Erst das Zusammenwirken mehrerer Schwachstellen unterschiedlicher Komponenten von solchen Produkten führt dazu, dass die betreffenden Produkte in ihrer Gesamtheit Schwächen aufweisen, die für das Gesamtsystem sicherheitskritisch sind.

Eine wesentliche Aufgabe der Erfindung besteht darin, solche Schwachstellen in den einzelnen Komponenten aufzuspüren, die für das Gesamtsystem ein Sicherheitsrisiko darstellen. Dabei ist es von besonderem Nutzen für den Anwender, auch die einzelnen Komponenten, die Schwachstellen enthalten zu lokalisieren. Darüber hinaus soll auch der Zusammenhang der einzelnen Schwachstellen in Form einer Schwachstellenkette (attack tree) identifizieren werden, die es einem Angreifer erlaubt, auf einzelne Komponenten unbefugt zuzugreifen oder diese unbefugt zu manipulieren.

Die Erfindung löst diese Aufgabe bei einem Verfahren der eingangs genannten Art mit den Merkmalen des Patentanspruchs 1. Dabei ist vorgesehen, dass a) diese Produkte miteinander in Datenverbindung stehende Komponenten umfassen, wobei b) ein Modell für die Produkte erstellt wird, das die folgenden Informationen enthält:
i) Verbindungsinformationen, die angeben, in welcher Weise die einzelnen Komponenten miteinander in Datenverbindung stehen, und
ii) für jede der derart modellierten Komponenten ein Komponenten-Modell betreffend die Erlangung von Fähigkeiten auf der jeweiligen modellierten Komponente, wobei das Komponenten-Modell eine oder mehrere Modell-Regeln vorgibt, die beschreiben, welche Fähigkeiten man auf der modellierten Komponente erlangt, wenn man über vorgegebene Fähigkeiten auf einer verbundenen Komponente verfügt,

dass c) die Produkte die im Modell beschriebenen Eigenschaften aufweisen, wobei d) ein Angreifer-Szenario in Bezug auf das Modell durch Vorgabe einer Ausgangssituation betreffend der initialen Fähigkeiten des Angreifers erstellt wird, wobei dem Modell zumindest eine zusätzliche externe Komponente hinzugefügt wird, die mit zumindest einer modellierten Komponente des Systems verbunden wird, wobei die Funktionsweise dieser externen Komponente insbesondere durch ein wie in Schritt b) ii) festgelegtes Komponenten-Modell modelliert ist, und wobei dem Angreifer alle oder einzelne Fähigkeiten auf der externen Komponente zugewiesen werden, und/oder dem Angreifer einzelne Fähigkeiten auf einer oder mehreren der Komponenten des Systems zugewiesen werden,
dass e) ausgehend von den Fähigkeiten des Angriffsszenarios unter Berücksichtigung der bereits erlangten Fähigkeiten, der Verbindungsinformation sowie der Modell-Regeln iterativ weitere Fähigkeiten des Angreifers auf den einzelnen Komponenten ermittelt werden,
und dass f) eine kritische Schwachstellenkette am modellierten Produkt dann identifiziert wird, wenn der Angreifer basierend auf der durchgeführten Analyse vorgegebene Ziel-Fähigkeiten auf einer oder mehreren vorgegebenen Ziel-Komponenten erhält.

Diese Vorgehensweise hat den wesentlichen Vorteil, einfach mögliche Schwachstellen in einer Vielzahl unterschiedlicher Produkte abschätzen zu können.

Zur einfachen Erstellung von Modellen für Produkte, die eine Vielzahl gleichartiger oder im wesentlichen gleichartiger Komponenten enthalten, kann vorgesehen sein, dass zur Festlegung des Komponenten-Modells für die einzelnen Komponenten des Produkts eine Anzahl von Komponententyp-Modellen herangezogen wird, wobei diese Komponententyp-Modelle über eine Anzahl von vorgebbaren und an die einzelnen zu prüfenden Komponenten anpassbaren Modell-Parametern verfügen, und die Komponenten-Modelle für die jeweiligen Komponenten durch Auswahl eines Komponententyp-Modells und anschließende Anpassung der Modell-Parametern des ausgewählten Komponententyp-Modells an die jeweilige Funktionsweise der modellierten Komponente erstellt werden.

Um automatisiert nach Lösungen für bestehende Schwachstellenketten suchen zu können, kann vorgesehen sein, dass nach der Ermittlung einer Schwachstelle in einem Ausgangs-Szenario durch Erlangung einer vorgegebenen Ziel-Fähigkeit auf einer vorgegebenen oder ausgewählten Ziel-Komponente nach Modifikationen von Modellparametern der einzelnen Komponenten gesucht wird, dass unter Zugrundelegung des Ausgangs-Szenarios die Erlangung einzelner oder aller Zielfähigkeiten auf einzelnen oder allen Ziel-Komponenten nicht mehr möglich ist, und anschließend die modellierten realen Komponenten entsprechend der abzuändernden Modellparameter modifiziert oder aktualisiert werden.

Im Folgenden werden einige Ausführungsbeispiele der Erfindung exemplarisch und ohne Einschränkung des allgemeinen erfinderischen Gedankens näher dargestellt.

### Modellierte Komponenten und ihre Verknüpfung

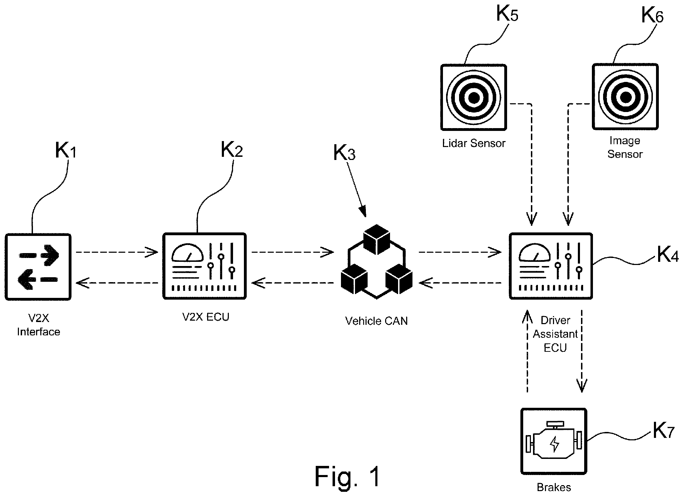

In Fig. 1 ist schematisch und in vereinfachter Form ein Modell der Verschaltung einzelner miteinander vernetzter elektronischer Komponenten eines Produkts, im konkreten Fall eines Kraftfahrzeugs, näher dargestellt. Für dieses Produkt sowie eine Anzahl von entsprechend gleichartig aufgebauten anderen Produkten wird ein Modell erstellt, das die Funktionalität dieser Produkte modelliert.

Sämtliche der Produkte umfassen dabei einzelne, untereinander jeweils gleich aufgebaute elektronische Komponenten, beispielsweise eine WLAN-Schnittstelle in Form eines V2X Interface K₁, zwei Verarbeitungseinheiten V2X ECU K₂ und Driver Assistant ECU K₄, zwei Sensoren, nämlich einen Lidar Sensor K₅ und einen Image Sensor K₆, einen Bus Vehicle CAN K₃ und einen Aktuator zur Bremssteuerung K₇.

Alle diese Komponenten sind in den Produkten enthalten bzw verbaut und in gleicher Weise miteinander verschaltet. Im konkreten Fall ist beispielsweise die WLAN-Schnittstelle V2X Interface K₁ an die Verarbeitungseinheit V2X ECU K₂ angeschlossen. Die beiden Sensoren K₅ und K₆ und der Aktuator K₇ sind an die Verarbeitungseinheit Driver Assistant ECU K₄ angeschlossen. Alle Datenverbindungen sind in Fig. 1 als Pfeile ersichtlich. Die Pfeilrichtung zeigt an, in welche Richtung Daten ausgetauscht werden.

Um nun ein Modell zu entwickeln, das die Datenkommunikation in sämtlichen der gleichartig aufgebauten Produkte abbildet bzw modelliert, wird für jede der in allen Produkten enthaltenen Komponenten jeweils ein Komponenten-Modell herangezogen. Das Modell M des Produkts umfasst im vorliegenden Fall eine Anzahl von Komponenten-Modellen KM₁, ..., KMₙ, wobei jede der in Fig. 1 dargestellten Komponenten K₁, ..., K₇ jeweils durch ein Komponenten-Modell KM₁, ..., KM₇ modelliert wird,

Ebenso umfasst das Modell M Informationen darüber, wie die einzelnen Komponenten im Produkt miteinander in Datenverbindung stehen. Dementsprechend sind im Modell Verbindungsinformationen hinterlegt, die die Datenverbindung zwischen den die Komponenten modellierenden Komponenten-Modellen KM₁, ..., KMₙ beschreiben.

Das in Fig. 1 dargestellte System kann grundsätzlich auf unterschiedliche Weise modelliert werden. Eine einfache Modellierung weist jeder der gezeigten Komponenten jeweils ein zugehöriges Komponenten-Modell zu. Im konkreten Fall ist beispielsweise die WLAN-Schnittstelle V2X Interface K₁ durch ein Komponenten-Modell KM, modelliert. Die Verarbeitungseinheit K₂ wird durch ein diesbezügliches Komponenten-Modell KM₂ modelliert, die beiden Sensoren K₅ und K₆ durch die Komponenten-Modelle Komponenten-Modell KM₅, KM₆, und der Aktuator K₇ durch das Komponenten-Modell KM₇ und die Verarbeitungseinheit Driver Assistant ECU K₄ durch das Komponenten-Modell KM₄. Die in **Fig. 1** als Pfeile ersichtlichen Datenverbindungen sind ebenfalls Teil des Modells, sodass dieses nicht bloß die einzelnen Komponenten, sondern auch deren jeweilige Datenverbindung erfasst. Dabei ist im Modell auch die durch die Pfeilrichtung in **Fig. 1** dargestellte Richtung der Datenkommunikation erfasst.

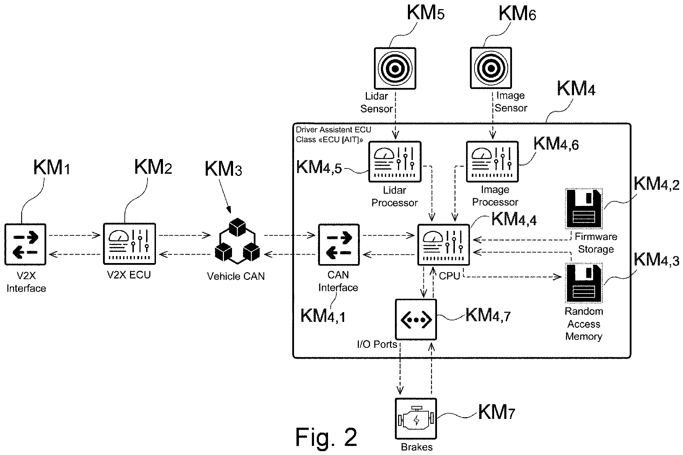

Bei der Erstellung eines Modells ausgehend von einem Produkt kann - je nach den zu modellierenden Angriffskonstellationen - ein unterschiedlicher Abstraktionsgrad der Modelle vorgegeben werden. Beispielsweise kann anstelle des Modells KM₄ einer Verarbeitungseinheit K₄ auch ein detaillierteres Modell vorgesehen sein, in dem die einzelnen Schnittstellen der Verarbeitungseinheit K₄ als separate Einzel-Komponentenmodelle K₄,₁ ..., K₄,ₘ ausgeführt sind. Ein solches detaillierteres Modell einer Komponente K₄ ist beispielsweise in **Fig. 2** dargestellt. So kann eine detailliertes Komponenten-Modell KM₄ der Verarbeitungseinheit K₄ die folgenden Komponentenmodelle KM_{4,1}, ..., KM_{4,7} enthalten:
- ein Komponentenmodell KM_{4,1} für eine Hardware-Schnittstelle zum CAN-Bus K₃,
- ein Komponentenmodell KM_{4,2} für einen Programmspeicher für Firmware,
- ein Komponentenmodell KM_{4,3} für einen Zwischenspeicher,
- ein Komponentenmodell KM_{4,4} für eine zentrale Recheneinheit,
- ein Komponentenmodell KM_{4,5} für eine Verarbeitungseinheit für die von der LIDAR-Einheit K₅ erstellten Daten,
- ein Komponentenmodell KM_{4,6} für eine Verarbeitungseinheit für die vom Bildsensor K₆ erstellten Daten,
- ein Komponentenmodell KM_{4,7} für eine Hardware-Schnittstelle zum Aktuator K₇.

Die einzelnen Komponenten - und dementsprechend auch deren Komponenten-Modelle - stehen entsprechend der Darstellung in **Fig. 2** miteinander in Datenverbindung. Diese Datenverbindung ist auch im Modell abgebildet, zB stehen sämtliche Komponenten-Modelle KM_{4,1}, KM_{4,2}, KM_{4,3}, KM_{4,5}, KM_{4,6}, KM_{4,7} mit dem Komponenten-Modell KM_{4,4} der zentralen Recheneinheit miteinander in Datenverbindung, wobei die Komponenten-Modelle KM_{4,5}, KM_{4,6} jeweils ausschließlich Daten an das Komponenten-Modell KM_{4,4} der zentralen Recheneinheit übermitteln, während die übrigen Komponenten-Modelle KM_{4,1}, KM_{4,2}, KM_{4,3}, KM_{4,7} sowohl Daten an das Komponenten-Modell KM_{4,4} übertragen als auch von diesem erhalten können.

### Erlangung von Fähigkeiten aufgrund von Schwachstellen

Um nun das Verhalten der Komponenten in Bezug auf Schwachstellen zu modellieren, wird für jede Komponente ein Komponenten-Modell erstellt. Diese legt die jeweilige Komponente eine Anzahl von Fähigkeiten fest, die man auf der betreffenden Komponente erlangen kann.

So kann beispielsweise ein Angreifer auf einer WLAN-Schnittstelle in Form eines V2X Interface grundsätzlich die Möglichkeit erlangen, alle eingehenden Daten mitzuhören oder Daten über die WLAN-Schnittstelle zu senden. Handelt es sich bei der Komponente beispielsweise um eine Steuereinheit für eine Bremse, kann ein Angreifer zB die Möglichkeit erhalten, den Zustand der Bremse auszulesen oder auch die Bremse zu aktivieren. Auf den im Modell dargestellten Komponenten können beispielsweise die im Folgenden dargestellten Fähigkeiten erlangt werden.

| **Komponenten bzw Komponenten-Modelle** | **Fähigkeiten** |
|---|---|
| K₁, K₃, K₇; KM₁, KM₃, KM₇ | Lesezugriff, Schreibzugriff |
| K₂, K₄; KM₂, KM₄ | Administratorrechte |
| K₅, K₆; KM₅, KM₆ | Lesezugriff |

Um konkrete Schwachstellen der einzelnen Komponenten zu modellieren wird in weiterer Folge in den einzelnen Komponenten-Modellen noch definiert, welche Fähigkeiten ein Angreifer auf der betreffenden modellierten Komponente erlangen kann, wenn dieser an verbundenen Komponenten über bestimmte Fähigkeiten verfügt.

Im vorliegenden vereinfachten Ausführungsbeispiel verfügt beispielsweise die Verarbeitungseinheit K₂ über eine (isolierte) Schwachstelle: Erlangt man auf dem mit der Verarbeitungseinheit K₂ verbundenen WLAN-Schnittstelle K₁ über Schreibrechte, so erlangt man auch auf der Verarbeitungseinheit K₃ Administratorrechte. Weiters bestehen noch folgende Schwachstellen:

| **Fähigkeiten auf Nachbarkomponente** | **Komponente** | **Neue Fähigkeiten** |
|---|---|---|
| Schreibzugriff | K₂, K₄ | Administratorrechte |
| Administratorrechte | K₁, K₃, K₇ | Lesezugriff, Schreibzugriff |
| Administratorrechte | K₅, K₆ | Lesezugriff |

Fähigkeiten werden dabei nur in Richtung des in den Fig 1 durch Pfeile dargestellten Datenflusses vom Angreifer erworben. Somit ist es beispielsweise nicht möglich den Lesezugriff auf die Sensoren K₅ und K₆ zu erhalten, denn es gibt keinen Datenfluss zu diesen Komponenten, die ein Angreifer nutzen könnte.

### Angreifer-Szenario

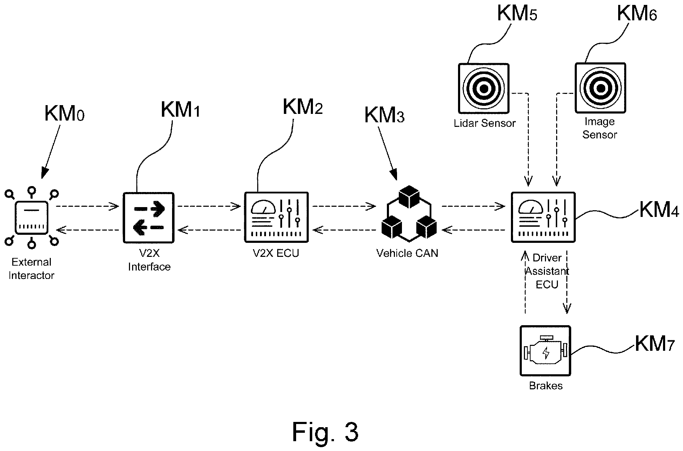

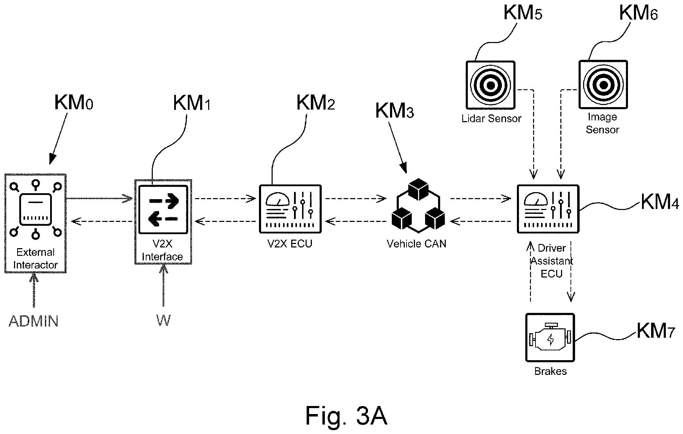

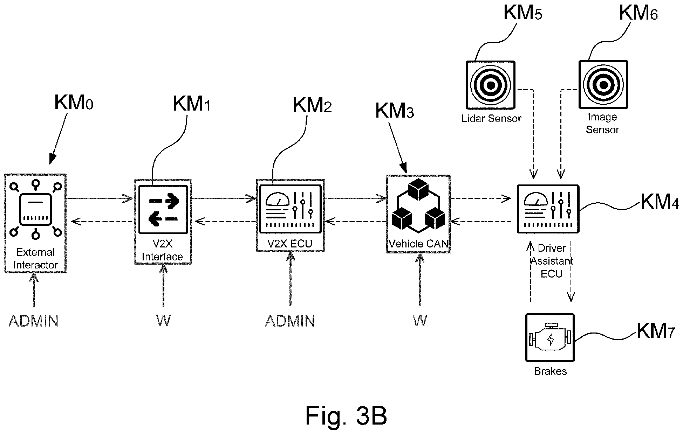

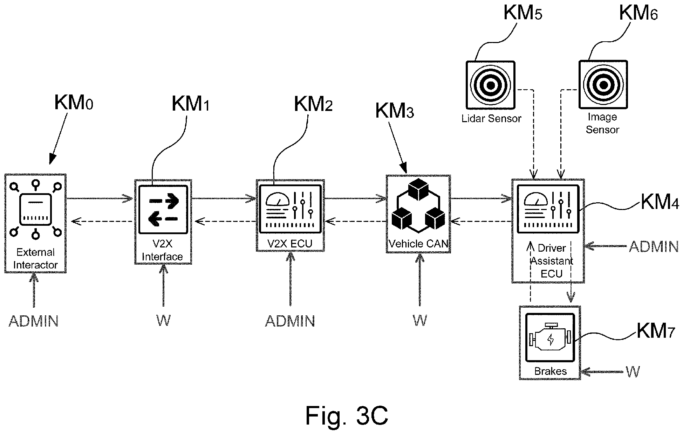

Um nun zu prüfen, ob bei den zu untersuchenden Produkten kritische Schwachstellenketten bestehen, wird, wie in **Fig. 3** dargestellt, zusätzlich zum bereits festgelegten Modell noch ein Angriffs-Szenario in Bezug auf das Modell festgelegt. Mit diesem Angriffs-Szenario sollen die initialen Fähigkeiten des Angreifers festgelegt werden. Ist es beispielsweise möglich oder wahrscheinlich, dass ein Angreifer auf bestimmten Komponenten des Produkts zugreifen kann, so wird dies im Rahmen des Angreifer-Szenarios festgelegt. Beispielsweise kann als Angreifer-Szenarios festgelegt werden, dass ein Angreifer über einen WLAN-Transponder verfügt, der dazu in der Lage ist, mit der WLAN-Schnittstelle K₁ in Datenverbindung zu treten. Die dem Angreifer zugerechneten Komponenten werden dabei im Modell durch ein zusätzliches externes Komponenten-Modell "External Interactor" KM₀ modelliert. Der Angreifer hat auf der durch das Komponenten-Modell "External Interactor" KM₀ modellierten Komponenten K₆ die Fähigkeit "Administratorrechte" bzw sämtliche zur Verfügung stehenden Fähigkeiten automatisch, da er diese Komponente ja kontrolliert.

Im Modell werden dabei zusätzliche Datenverbindungen eingefügt, mit denen die zusätzliche externe Komponentenmodelle KM₀ mit den bestehenden Komponenten-Modellen verknüpft werden. Konkret steht das Modell KM₀ des WLAN-Transponders mit dem Komponenten-Modellen KM, der WLAN-Schnittstelle K₁ in Datenverbindung. Die Funktionsweise dieser externen Komponente kann grundsätzlich durch ein Komponenten-Modell modelliert bzw. festgelegt werden, die einem der bereits dargestellten Komponenten-Modelle entspricht. Insbesondere ist es auch möglich dem Angreifer auf dem ihm zugewiesenen Komponenten sämtliche verfügbaren Fähigkeiten zuzuweisen.

Alternativ besteht auch die Möglichkeit, ein Angriffs-Szenario dadurch zu definieren, dem Angreifer keine eigenen Komponenten zuzuweisen, sondern diese einzelnen Fähigkeiten auf den bestehenden Komponenten zuzuweisen und dies in den diesbezüglichen Modell-Komponenten abzubilden. Dies bedeutet, dass anstelle der in den Fig. beschriebenen Modellierung auch vorgesehen sein kann, dass dem Angreifer auf der Komponente K₁ die Fähigkeit Schreibzugriff zugewiesen werden kann.

### Modellierung des Angriffs

Sind nun sämtliche Komponenten und deren Schwachstellen durch entsprechende Modelle festgelegt und ist auch aufgrund des Angreifer-Modells klargestellt, welche Fähigkeiten dem Angreifer am Beginn des Angriffs zukommen, so kann in weitere Folge iterativ ermittelt werden, welche Fähigkeiten der Angreifer weiterhin erwerben kann. Im vorliegenden Fall nützt der Angreifer eine weitere Schwachstelle der Verarbeitungseinheit K₂ aus: Erlangt er nämlich Schreibzugriff (W in der Zeichnung) auf die WLAN-Schnittstelle K₁, so ist es ihm aufgrund der zuvor spezifizierten und im Komponenten-Modell KM₂ spezifizierten Schwachstelle möglich, Administratorzugriff, in den Zeichnungen als ADMIN bezeichnet, auf die Verarbeitungseinheit V2X ECU K₂ zu erhalten.

In **Fig. 3A** ist der erste Schritt des Angriffs näher dargestellt, bei dem der Angreifer Zugriff auf die WLAN-Schnittstelle K₁ erlangt hat.

Mit Schreibzugriff auf K₁ kann der Angreifer durch eine weiter Sicherheitslücke Administratorrechte auf der Verarbeitungskomponente K₂ erwerben. Mit Administratorrechten auf der Komponente K₃ kann der Angreifer Schreibzugriff auf den Bus K₃ erhalten. Dieser Zustand ist in **Fig. 3B** dargestellt.

Mit Schreibrechten auf K₃ kann der Angreifer durch eine weiter Sicherheitslücke Administratorrechte auf der Verarbeitungseinheit K₄. Zuletzt kann der Angreifer auch Schreibzugriff auf den Aktuator Break K₇ erhalten, was ja das Ziel des Angriffs war.

Dies ist in **Fig. 3C** dargestellt. Schreibzugriff besteht auf das Bremssystem des Fahrzeugs in einer Weise, dass der Angreifer die Bremse nach seinem Belieben steuern kann. Da eine solche Fernsteuerung erhebliche Auswirkungen auf die Gesamtsicherheit des Systems hat, ist diese als kritische Schwachstelle des gesamten Produkts anzusehen.

Im Rahmen der Beurteilung der Schwere der Auswirkungen des Angriffs wird daher die Erlangung der Kontrolle über das Auslösen der Bremse als Ziel-Fähigkeit, die Bremssteuerungseinheit als Ziel-Komponenten betrachtet.

Kann nun im Rahmen der iterativen Prüfung der Auswirkungen von einzelnen Schwachstellen an Komponenten ermittelt werden, dass einem Angreifer im vorliegenden Angriffs-Szenario die Möglichkeit gegeben ist, Ziel-Fähigkeiten auf Ziel-Komponenten zu erlangen, wird eine kritische Schwachstellenkette an allen gleichartigen Produkten erkannt. Es ist damit klar, dass sämtliche Produkte, die der Modell-Spezifikation entsprechen, die betreffende Schwachstellenkette aufweisen.

Die Schwachstelle an den betreffenden Produkten kann anschließend durch Maßnahmen wie Austausch von Komponenten, Firmware-Updates oder manuelle Änderungen von Einstellungen entsprechend behoben werden.

### Komponententyp-Modelle

Eine weitere Vereinfachung bei der Erstellung der genannten Modelle kann dadurch erzielt werden, dass gleichartige Komponenten-Modelle nicht in allen ihren Einzelheiten separat definiert werden, sondern dass diese Komponenten-Modelle als Instanzen von vorab vordefinierten Komponententyp-Modellen festgelegt werden. So kann beispielsweise das Komponenten-Modell KM₂ einer Verarbeitungseinheit K₂ als Instanz eines Komponententyp-Modells einer allgemeinen Verarbeitungseinheit KTM erstellt werden. Sofern sämtliche Verarbeitungseinheiten hinsichtlich der auf ihnen erwerbbaren Fähigkeiten in gleicher Weise funktionieren, kann bereits durch Verwendung solcher Modelle eine erhebliche Verringerung des Modellierungsaufwands erzielt werden.

### Parametrierung der Komponententyp-Modelle

Darüber hinaus ist es aber auch noch möglich, in den einzelnen Komponententyp-Modelle Parameter vorzusehen, die eine Anpassung des betreffenden Modells an die konkreten Vorgaben der einzelnen verwendeten Komponenten zu ermöglichen.

Beispielsweise kann für die WLAN-Schnittstelle K₁ ein Komponenten-Modell KM, als Instanz eines Komponententyp-Modelles "WLAN-Schnittstelle" festgelegt werden. Werden im gleichen Produkt mehrere solcher Schnittstellen verwendet, braucht die einmal festgelegte Funktionalität nur einmal spezifiziert werden. Arbeiten aber beispielsweise einzelne der realen Komponenten K₁ im tatsächlichen Produkt mit Verschlüsselung, andere hingegen nicht, so könnten zunächst zwei Komponententyp-Modelle, nämlich "WLAN-Schnittstelle mit Verschlüsselung" und "WLAN-Schnittstelle ohne Verschlüsselung" erstellt werden. Da mit der Anzahl von möglichen Anpassungen der einzelnen Komponenten die Anzahl der Komponententyp-Modelle erheblich steigen würde, stellt eine Parametrierung mit einer Anzahl von Modell-Parametern der Komponententyp-Modelle eine erhebliche Verbesserung dar.

Bei der Spezifikation des Modells kann somit auf eine kleine Anzahl von Komponententyp-Modellen zurückgegriffen werden, die entsprechend den Anforderungen der Modellierung an die einzelnen real verwendeten Komponenten angepasst werden können.

Das parametrierte Komponentenmodell für die WLAN-Schnittstelle sieht wie folgt aus:

| **Fähigkeiten auf Nachbarkomponente** | **Parameter** | **Neue Fähigkeiten** |
|---|---|---|
| Administratorrechte | Verschlüsselt=Ja | keine |
| Administratorrechte | Verschlüsselt=Nein | Lesezugriff, Schreibzugriff |

Bei der Instanziierung von K₁ wird der Parameter Verschlüsselt=Nein gewählt, da diese Schnittstelle ja von außen von anderen Fahrzeugen erreichbar sein soll. Somit ergibt sich das konkrete Komponentenmodell KM₁:

| **Fähigkeiten auf Nachbarkomponente** | **Neue Fähigkeiten auf K₁** |
|---|---|
| Administratorrechte | Lesezugriff, Schreibzugriff |

### Parameter-Anpassung und Schwachstellenvermeidung

Eine weitere bevorzugte Weiterentwicklung der Erfindung sieht vor, dass die im Rahmen der Komponententyp-Modelle zur Verfügung gestellten Parameter dazu genutzt werden können, um eine mögliche Lösung des durch die erkannte Schwachstellenkette verursachten Problems zu ermöglichen.

Dabei werden nach der Feststellung einer Schwachstelle in einem Ausgangs-Szenario durch Erlangung einer vorgegebenen Ziel-Fähigkeit auf einer vorgegebenen oder ausgewählten Ziel-Komponente einzelne Modellparameter von den modellierten Komponenten abgeändert. Dabei wird nach Modellparametern für die einzelnen Komponenten-Modelle bzw Komponenten gesucht, sodass unter Zugrundelegung des Ausgangs-Szenarios die Erlangung einzelner oder aller Zielfähigkeiten auf einzelnen oder allen Ziel-Komponenten nicht mehr möglich ist

Führt eine solche Abänderung dazu, dass die beschriebene Schwachstellenkette nicht mehr besteht, können die in den modellierten Modell-Komponenten vorgegebenen Abänderungen auch auf den realen Komponenten vorgenommen werden. Die modellierten realen Komponenten werden also entsprechend der abzuändernden Modellparameter modifiziert oder aktualisiert werden.

Im vorliegenden Fall können alle Modell-Komponenten, die dem Angreifer die Möglichkeit zum Zugriff bzw zur Erlangung der Ziel-Fähigkeiten auf die Ziel-Komponente bieten in ihren Parametern variiert werden. Im vorliegenden Fall kann beispielsweise durch Absicherung der Verarbeitungseinheit K₂ durch Verwendung einer Eingabevalidierung erreicht werden, dass dem Angreifer ein Zugriff auf die Verarbeitungseinheit nicht mehr möglich ist, sodass keine durchgehende Schwachstellenkette mehr besteht. Alternativ kann dieser Effekt auch durch Absicherung von der WLAN-Schnittstelle erreicht werden.

Im Folgenden wird angenommen, dass das Komponententyp-Modell der Verarbeitungseinheit hat den Parameter Eingabevalidierung wie folgt aufweist:

| **Fähigkeiten auf Nachbarkomponente** | **Parameter** | **Neue Fähigkeiten** |
|---|---|---|
| Schreibzugriff | Eingabevalidierung=Ja | keine |
| Schreibzugriff | Eingabevalidierung=Nein (standard) | Administratorrechte |

Es gibt nun drei Möglichkeiten die Schwachstellenkette durch eine Abänderung von Parametern zu unterbrechen:
1. Bei der WLAN-Schnittstelle KM₁ den Parameter Verschlüsselt auf "Ja" setzen
2. Bei der Verarbeitungseinheit KM₂ den Parameter Eingabevalidierung auf "Ja" setzen
3. Bei der Verarbeitungseinheit KM₄ den Parameter Eingabevalidierung auf "Ja" setzen

Im Ergebnis erhält man also automatisiert mehrere Möglichkeiten der Abänderung der realen Produkte, um die genannten Schwachstellen zu vermeiden. Der Ingenieur kann daraus die für das Produkt beste wählen. Im konkreten Beispiel macht eine Eingabevalidierung mehr Sinn als die WLAN-Schnittstelle abzusichern, da ja ein Zugriff von außen auf das Fahrzeug gewünscht ist. Durch die Eingabevalidierung wird sichergestellt, dass nur gewünschte Informationen mit dem Fahrzeug ausgetauscht werden können.

## Patentansprüche

1. Computerimplementiertes Verfahren zur Ermittlung von kritischen Schwachstellenketten in einer Gesamtheit vor gleichartig aufgebauten Hardware-Produkten, die gegebenenfalls sowohl Hardwareals auch Softwarekomponenten enthalten,
a) wobei diese Produkte miteinander in Datenverbindung stehende Komponenten umfassen,
b) wobei ein Modell für die Produkte erstellt wird, das die folgenden Informationen enthält:
i) Verbindungsinformationen, die angeben, in welcher Weise die einzelnen Komponenten miteinander in Datenverbindung stehen, und
ii) für jede der derart modellierten Komponenten ein Komponenten-Modell betreffend die Erlangung von Fähigkeiten auf der jeweiligen modellierten Komponente, wobei das Komponenten-Modell eine oder mehrere Modell-Regeln vorgibt, die beschreiben, welche Fähigkeiten man auf der modellierten Komponente erlangt, wenn man über vorgegebene Fähigkeiten auf einer verbundenen Komponente verfügt,
c) wobei die Produkte die im Modell beschriebenen Eigenschaften aufweisen,
d) wobei ein Angreifer-Szenario in Bezug auf das Modell durch Vorgabe einer Ausgangssituation betreffend der initialen Fähigkeiten des Angreifers erstellt wird, wobei
- dem Modell zumindest eine zusätzliche externe Komponente hinzugefügt wird, die mit zumindest einer modellierten Komponente des Systems verbunden wird, wobei die Funktionsweise dieser externen Komponente insbesondere durch ein wie in Schritt b) ii) festgelegtes Komponenten-Modell modelliert ist, und wobei dem Angreifer alle oder einzelne Fähigkeiten auf der externen Komponente zugewiesen werden, und/oder
- dem Angreifer einzelne Fähigkeiten auf einer oder mehreren der Komponenten des Systems zugewiesen werden,
e) wobei ausgehend von den Fähigkeiten des Angriffsszenarios unter Berücksichtigung der bereits erlangten Fähigkeiten, der Verbindungsinformation sowie der Modell-Regeln iterativ weitere Fähigkeiten des Angreifers auf den einzelnen Komponenten ermittelt werden,
f) wobei eine kritische Schwachstellenkette am modellierten Produkt dann identifiziert wird, wenn der Angreifer basierend auf der durchgeführten Analyse vorgegebene Ziel-Fähigkeiten auf einer oder mehreren vorgegebenen Ziel-Komponenten erhält.

2. Verfahren nach Anspruch 1, wobei zur Festlegung des Komponenten-Modells für die einzelnen Komponenten des Produkts:
- eine Anzahl von Komponententyp-Modellen herangezogen wird, wobei diese Komponententyp-Modelle über eine Anzahl von vorgebbaren und an die einzelnen zu prüfenden Komponenten anpassbaren Modell-Parametern verfügen,
- die Komponenten-Modelle für die jeweiligen Komponenten durch Auswahl eines Komponententyp-Modells und anschließende Anpassung der Modell-Parametern des ausgewählten Komponententyp-Modells an die jeweilige Funktionsweise der modellierten Komponente erstellt werden.

3. Verfahren nach Anspruch 2, wobei
- nach der Ermittlung einer Schwachstelle in einem Ausgangs-Szenario durch Erlangung einer vorgegebenen Ziel-Fähigkeit auf einer vorgegebenen oder ausgewählten Ziel-Komponente nach Modifikationen von Modellparametern der einzelnen Komponenten gesucht wird, dass unter Zugrundelegung des Ausgangs-Szenarios die Erlangung einzelner oder aller Zielfähigkeiten auf einzelnen oder allen Ziel-Komponenten nicht mehr möglich ist, und
- anschließend die modellierten realen Komponenten entsprechend der abzuändernden Modellparameter modifiziert oder aktualisiert werden.

## Claims

1. A computer-implemented method for identifying critical chains of vulnerabilities in a set of similarly structured hardware products, which may contain both hardware and software components,
a) wherein these products comprise components that are in data communication with one another,
b) wherein a model is created for the products, which contains the following information:
i) connection information specifying how the individual components are in data connection to one another, and
ii) for each of the components modelled in this way, a component model relating to the acquisition of capabilities on the respective modelled component, wherein the component model specifies one or more model rules which describe which capabilities are acquired on the modelled component when one possesses specified capabilities on a connected component,
c) wherein the products exhibit the properties described in the model,
d) wherein an attacker scenario is created with respect to the model by specifying an initial situation relating to the attacker's initial capabilities, whereby
- at least one additional external component is added to the model, which is connected to at least one modelled component of the system, whereby the functionality of this external component is modelled in particular by a component model as defined in step b) ii), and whereby all or individual capabilities on the external component are assigned to the attacker,
and/or
- the attacker is assigned individual capabilities on one or more of the system's components,
e) whereby, based on the capabilities of the attack scenario and taking into account the capabilities already acquired, the connection information and the model rules, further capabilities of the attacker on the individual components are determined iteratively,
f) whereby a critical vulnerability chain in the modelled product is identified when, based on the analysis carried out, the attacker gains specified target capabilities on one or more specified target components.

2. The method according to claim 1, wherein, to define the component model for the individual components of the product:
- a number of component-type models are used, wherein these component-type models have a number of predefinable model parameters that can be adapted to the individual components to be tested,
- the component models for the respective components are created by selecting a component type model and subsequently adapting the model parameters of the selected component type model to the respective mode of operation of the modelled component.

3. A method according to claim 2, wherein
- following the identification of a vulnerability in an initial scenario by achieving a specified target capability on a specified or selected target component, modifications to the model parameters of the individual components are sought such that, based on the initial scenario, the achievement of individual or all target capabilities on individual or all target components is no longer possible, and
- subsequently, the modelled real-world components are modified or updated in accordance with the model parameters to be altered.

## Revendications

1. Procédé mis en œuvre par ordinateur pour l'identification de chaînes de vulnérabilités critiques dans un ensemble de produits matériels de conception similaire, pouvant contenir à la fois des composants matériels et logiciels,
a) ces produits comprenant des composants en communication de données les uns avec les autres,
b) un modèle des produits étant établi, qui contient les informations suivantes :
i) des informations de connexion précisant la manière dont les différents composants sont reliés entre eux par une connexion de données, et
ii) pour chacun des composants ainsi modélisés, un modèle de composant concernant l'acquisition de capacités sur le composant modélisé concerné, le modèle de composant définissant une ou plusieurs règles de modélisation qui décrivent quelles capacités sont acquises sur le composant modélisé lorsque l'on dispose de capacités prédéfinies sur un composant connecté,
c) les produits présentant les propriétés décrites dans le modèle,
d) un scénario d'attaque étant établi par rapport au modèle en définissant une situation de départ concernant les capacités initiales de l'attaquant, dans lequel
- au moins un composant externe supplémentaire est ajouté au modèle et connecté à au moins un composant modélisé du système, le fonctionnement de ce composant externe étant notamment modélisé par un modèle de composant défini comme à l'étape b) ii), et toutes les capacités ou certaines d'entre elles du composant externe étant attribuées à l'attaquant,
et/ou
- des capacités individuelles sont attribuées à l'attaquant sur une ou plusieurs des composants du système,
e) où, à partir des capacités du scénario d'attaque, en tenant compte des capacités déjà acquises, des informations de connexion ainsi que des règles du modèle, d'autres capacités de l'attaquant sur les différentes composants sont déterminées de manière itérative,
f) une chaîne de vulnérabilités critiques étant alors identifiée sur le produit modélisé lorsque, sur la base de l'analyse effectuée, l'attaquant obtient des capacités cibles prédéfinies sur un ou plusieurs composants cibles prédéfinis.

2. Procédé selon la revendication 1, dans lequel, pour définir le modèle de composant pour chacun des composants du produit :
- on utilise un certain nombre de modèles de types de composants, ces modèles de types de composants disposant d'un certain nombre de paramètres de modèle pouvant être définis et adaptés aux différents composants à tester,
- les modèles de composants pour les composants respectifs sont créés par la sélection d'un modèle de type de composant, puis par l'adaptation des paramètres de ce modèle au fonctionnement respectif du composant modélisé.

3. Procédé selon la revendication 2, dans lequel
- après l'identification d'un vulnérabilité dans un scénario de départ par l'obtention d'une capacité cible prédéfinie sur un composant cible prédéfini ou sélectionné, on recherche des modifications des paramètres de modélisation des différents composants, de sorte que, sur la base du scénario de départ, l'obtention de certaines ou de toutes les capacités cibles sur certains ou tous les composants cibles ne soit plus possible, et
- ensuite, les composants réels modélisés sont modifiés ou mis à jour conformément aux paramètres du modèle à modifier.
